# EUROPEAN PATENT SPECIFICATION

(11) **EP 0 620 152 B1**
(45) Date of publication and mention of the grant of the patent: **04.06.1997**
(21) Application number: 94302511.4
(22) Date of filing: 11.04.1994
(51) Int. Cl.: B65B 61/18, B31B 1/84

(54) **Container pour spout applicator**
Vorrichtung zum Anbringen von Ausgiessern
Applicateur de becs verseurs

(30) Priority: 12.04.1993 US 45347
(43) Date of publication of application: 19.10.1994
(60) Divisional application: 96115280.8
(73) Proprietor: ELOPAK SYSTEMS AG, CH-8152 Glattbrugg (CH)
(72) Inventor: Owen, Barry Charles, Southfield, Michigan 48076 (US); Pape, Leslie, Novi, Michigan 48375 (US)
(74) Representative: Burrows, Anthony Gregory

(56) References cited:
- US-A- 4 512 136

## Description

This invention relates to a container fitment applicator and is applicable particularly, but not exclusively, to carton forming, filling and sealing machines, especially to such machines wherein pour spout fitments are applied while the cartons are being processed thereon.

Forming, filling and sealing machines having pour spout applicators at one of the stations therealong are known. For example, GB-A-2,238,287 discloses an application station at which a rotatable mandrel or bar is provided, with the mandrel having a boss projecting therefrom. A pour spout is placed on the boss by external means; as a carton is indexed into the application station, the mandrel is turned in the direction of the carton travel into the open top of the carton, aligning the boss with an opening formed in a selected panel of the top closure of the carton; the boss and pour spout are moved laterally through the opening; the inner flanged end of the pour spout is secured, such as by ultrasonic welding, to the inner surface around the opening; and the boss is withdrawn from the opening and then turned out of the open top. An outer cap is attached to the pouring spout before assembly.

Other pour spout applicators are disclosed US-A-4,788,811, wherein a horizontally elongated pour spout fitment attaching turret is located upstream of the usual turret and radial mandrels on which the bottom end closure is folded and sealed. The fitment attaching turret includes a pusher at one station for pushing an open-ended package over a sucker device for holding a pour spout fitment and inserting it into an opening in a package top panel. The fitment attaching turret is then rotated to a second station where an anvil is axially received in the package and cooperates with an ultrasonic horn for sealing a flange of the fitment to the inner surface of the top panel.

US-A-4386923 discloses a bag-in-box arrangement wherein a fitment is attached to the bag which is then inserted through a hole in flap of the box, while both are in a collapsed state.

According to one aspect of the present invention, there is provided an applicator for inserting a fitment into a wall of an open-ended container, comprising an oscillatory drive member, a fitment-holder oscillatable by said drive member between a fitment-receiving position in which a fitment is loaded into said fitment-holder and a second position, and supply means for supplying fitments to said fitment-holder at said fitment-receiving position, characterised in that the oscillation of said fitment-holder includes a single turning movement from said fitment-receiving position to a second position during the approach to which said fitment-holder inserts said fitment into said wall.

According to a second aspect of the present invention, there is provided a method of inserting a fitment into a wall of an open-ended container, comprising oscillating a fitment-holder between a fitment-receiving position and a second position, supplying a fitment to said fitment-holder while in its fitment-receiving position and turning said fitment-holder and thus said fitment from said fitment-receiving position to said second position in a single turning movement, characterised in that, during the approach of said fitment-holder to said second position, it inserts said fitment into said wall.

Owing to these two aspects of the invention, the applicator can be of simplified construction, because a single turning movement takes the fitment from being loaded onto the fitment-holder to being inserted into the container wall.

Preferably, the system comprises conveying means for advancing such open-ended containers one after another along a path, and the applicator comprises also sealing means arranged to seal the fitment to the wall, the sealing means pressing the fitment against the fitment-holder, and the fitment-holder being oscillated between said fitment-receiving position and said second position in a plane transverse to said path.

Thereby, one or more adjacent containers in the path can be operated upon simultaneously with the container being operated upon by the applicator, in other words it is possible to arrange that the applicator does not prevent simultaneous operations (of whatever kind) upon one or more adjacent containers. Thus, two or more applicators can operate simultaneously upon a group of two or more containers in a single lane. In such circumstances, drive means would drive the applicators substantially synchronously with each other. Thereby, the output rate of the system can be increased.

Generally, owing to this invention it is possible to provide an improved carton pour spout fitment applicator for use on a carton forming, filling and sealing machine. In particular, it is possible to provide an improved carton pour spout fitment applicator for applying the pour spout fitments to cartons while the cartons are being conveyed by a conveyor, or similar means, wherein aligned cartons are closely arrayed. It is especially possible to provide an improved pour spout fitment applicator for applying the pour spout fitment through an existing opening in an upper closure panel of a carton from the inside thereof, and sealing the same to the inside surface thereof. The applicator may include a turningly oscillatory shaft having an anvil secured thereto, a vacuum cup mounted on the distal end of the anvil, and a cam-controlled pivotable chute segment for co-ordinating the supplying of one fitment at a time to the vacuum cup, a linkage-and-toggle system for turning the anvil so as to insert the associated fitment into the opening, and an ultrasonic sealer with horn for sealing the flange of the fitment to the inner surface of the top panel around the opening, while backed-up by the anvil.

In order that the invention may be clearly understood and readily carried into effect, reference will now be made, by way of example, to the accompanying drawings, in which:-
Figure 1 is a side elevational view of a forming, filling and sealing machine;
Figure 2 is an enlarged elevational view of a pour spout fitment applicator of the machine, taken from a plane of the line 2-2 in Figure 1 and looking in the direction of the arrows;
Figure 3 is a perspective view of a pour spout fitment;
Figure 4 is a perspective view of a finished carton; and
Figure 5 is a fragmentary side elevational view of a double-indexing, forming, filling and sealing machine.

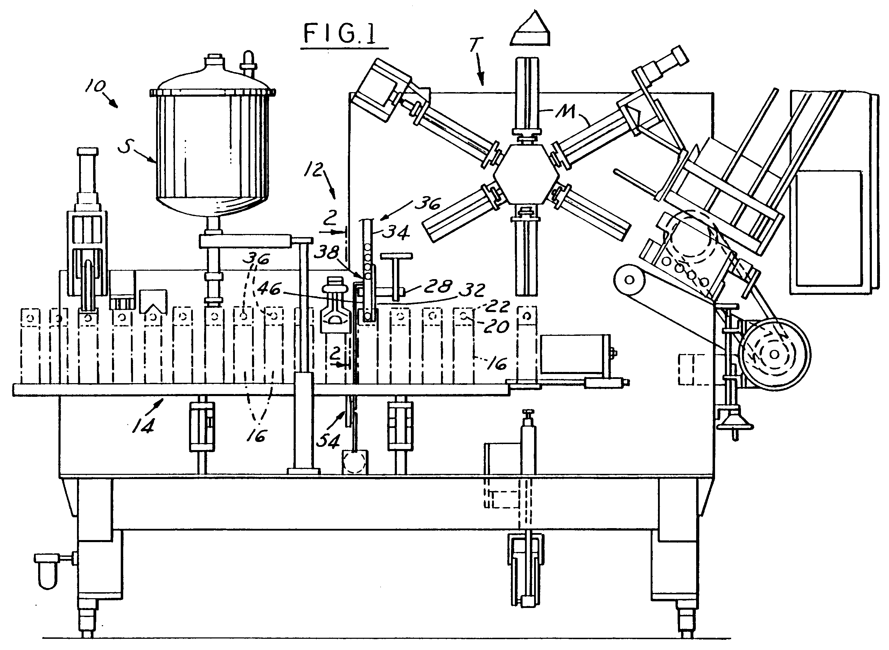

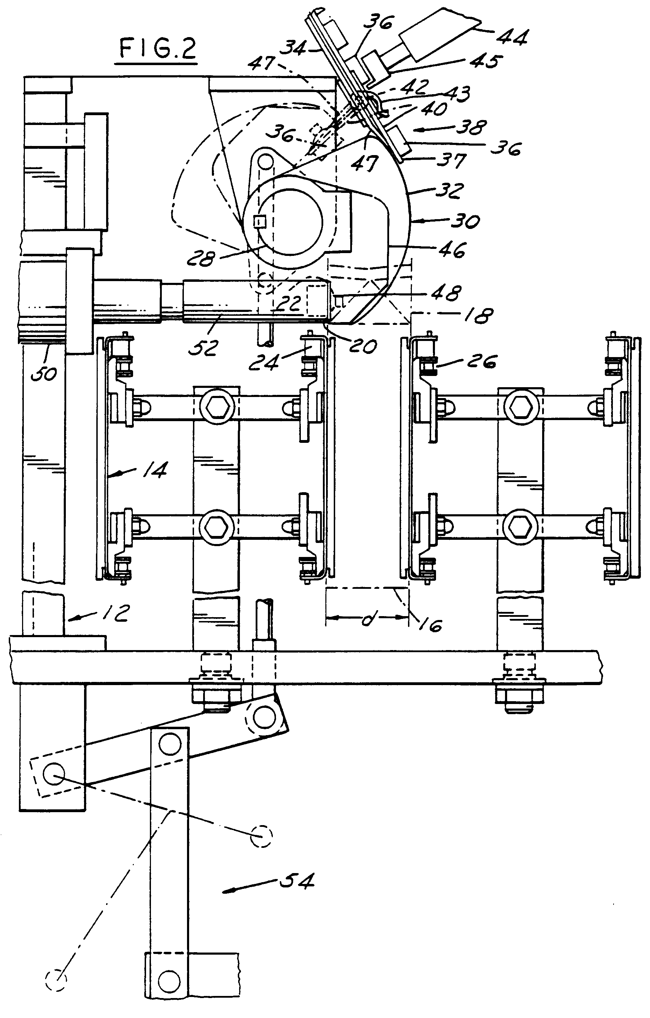

Referring now to the drawings in greater detail, Figures 1 and 2 illustrate a forming, filling and sealing machine 10 embodying a pour spout fitment applicator 12, and including a conveyor 14 carrying thermoplastic-coated cartons 16 having open-topped upper end closures 18. An opening 20 is formed in one panel 22 of each end closure 18. The applicator 12 is mounted on the machine 10 intermediate the usual indexable turret mechanism T including a plurality of mandrels M and the source S of a selected liquid.

As shown in Figure 2, the conveyor 14 comprises two endless chains 24 and 26 spaced a predetermined distance d apart, within which a series of closely spaced apart cartons 16 are carried, with the panel 22 bearing the opening 20 facing toward one of the chains 24.

The pour spout fitment applicator 12 includes a rotatable shaft 28 having a narrow cam 30 secured thereto. The cam 30 includes an outer arcuate surface 32. A chute 34 extends downwardly at a predetermined angle above the applicator 12. The chute 34 is adapted to hold a row of pour spout fitments 36 with flanges 37 thereon slidably aligned therein, as received from external loading means, such as a vibratory parts feeder (not shown). Such a parts feeder automatically orients a load of fitments 36 and feeds them in their oriented attitude to the chute 34.

An escapement device 38 includes a segment 40 pivotally connected by a pivot pin 42 to the distal end of the chute 34. A spring 43 mounted around the pivot pin 42 urges the segment 40 clockwise about the pivot pin while the line-up of fitments 36 is retained in the chute 34. The escapement device 38 also includes any suitable release mechanism, such as a cylinder 44 and associated stop member 45, adapted to release one fitment 36 into the segment 40 each time the segment is returned to an aligned relationship with the chute 34, as will be explained. A retaining clip 47 holds a fitment 36 loosely in the segment 40.

An anvil 46 is also secured to the shaft 28 adjacent the cam 30. A vacuum cup 48 is mounted on the end portion of the anvil 46.

An ultrasonic sealer 50 includes a retractable horn 52 having an axis aligned with the opening 20 in the panel 22.

A typical linkage and toggle system, represented as 54, is operatively connected to the shaft 28, serving to reciprocally rotate same in unison with the indexing of the cartons 16 by the conveyor 14.

In operation, as a carton 16 begins to index into position below the applicator 12, the linkage and toggle system 54 rotates the shaft 28 in a counterclockwise direction in Figure 2, thereby rotating the anvil 46 and the cam 30 out of the carton path and such that the surface 32 is rotated past the segment 40. Once the distal end of the cam 30 moves past the segment 40, the spring 43 pivots the segment from the position shown in solid lines in Figure 2 to the position shown in phantom. Once in the latter position, the vacuum cup 48 on the end portion of the anvil 46 engages and receives the fitment 36 from the segment 40.

As the system 54 causes the cam 30 and anvil 46 to next rotate in a clockwise direction, the surface 32 urges the segment 40 against the force of the spring 43 back to the solid line position of Figure 2. The escapement device 38 now permits the next in line fitment 36 to drop into loading position in the segment.

Concurrently, the anvil 46 and vacuum cup 48 rotate the fitment 36 into the open top of the now indexed carton, as shown in Figure 2, to thereby project the fitment outwardly through the opening 20, and engage the flange 37 against the inner surface of the panel 22 around the opening. While the anvil is in position behind the fitment 36, the ultrasonic sealer 50 and retractable horn 52 move to the right in Figure 2, into contact with the outer surface of the panel 22 around the portion of the fitment 36 extended therethrough, where it serves to weld the flange 37 of the fitment to the inner surface of the panel 22, after which the horn retracts.

The cam 30 and anvil 46 are then rotated by the system 54 out of the open top closure 18 for the next cycle, and the cartons 16 are indexed forward toward the usual filling and top sealing stations of the forming, filling and sealing machine 10.

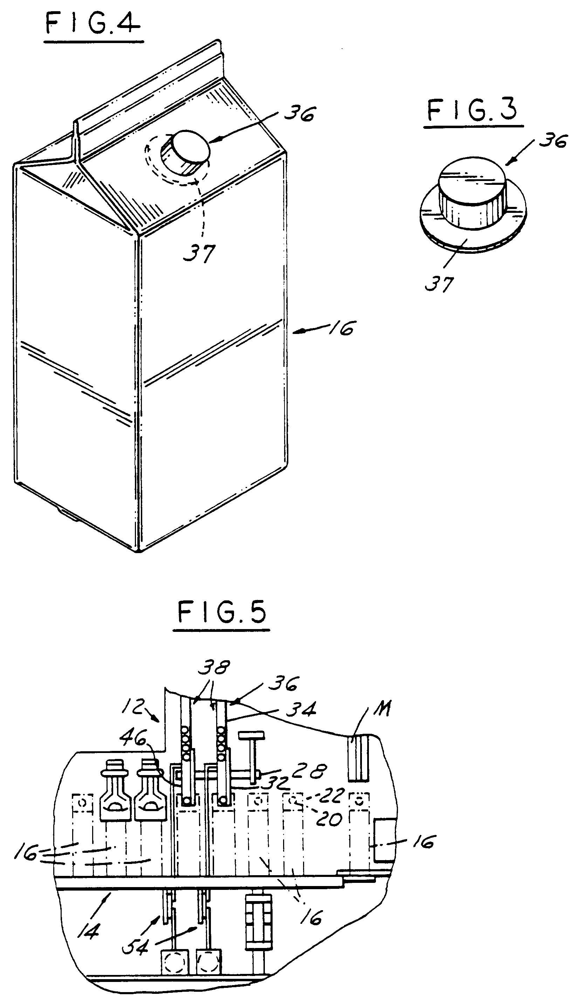

The applicator is particularly suitable for co-operation with an indexing conveyor of a high-production, forming, filling and sealing machine. For a machine which indexes closely arrayed cartons two or more at a time along one path, multiple applicators may be employed side-by-side to accommodate closely adjacent cartons. For such a machine, there would be dual or other multiple turrets or mandrels, or one turret and a single-to-dual indexing carton transfer mechanism and downstream multiple breakers, fillers, and sealers. Thus, as shown in Figure 5, owing to the applicator 12 operating in a plane transverse to the path of movement of the cartons through the machine 10, the above-described elements of the applicator and their operations may be duplicated for simultaneously applying fitments 36 to adjacent cartons 16 on a double indexing machine along a single lane, except that a single drive shaft 28 is employed to oscillate both sets of cams 30 and anvils 46. The interval between the applicators 12 is equal to the regular interval between the cartons 16.

## Claims

1. An applicator for inserting a fitment (36) into a wall (22) of an open-ended container (16), comprising an oscillatory drive member (28), a fitment-holder (48) oscillatable by said drive member (28) between a fitment-receiving position in which a fitment (36) is loaded into said fitment-holder (48) and a second position, and supply means (38) for supplying fitments (36) to said fitment-holder (48) at said fitment-receiving position, characterised in that the oscillation of said fitment-holder (48) includes a single movement which is a turning movement from said fitment-receiving position to a second position during the approach to which said fitment-holder (48) inserts said fitment (36) into said wall (22).

2. An applicator according to claim 1, wherein said supply means (38) includes a chute (34) for alignedly receiving fitments (36), a pivotable end segment (40) of said chute (34) adapted to receive one fitment (36) at a time from said chute (34), biassing means (43) for urging said end segment (40) toward said fitment-holder (48), and an arcuate-camming surface (32) of a cam (30) secured to said drive member (28) and adapted to return said end segment (40) to alignment with said chute (34) against the force of said biassing means (43) while an anvil (46) mounting said fitment-holder (48) on said drive member (28) is being turned into the open-ended container (16).

3. An applicator according to claim 2, wherein said cam (30) and said anvil (46) are secured side-by-side on said drive member (28) such that end portions thereof enter and leave said open-ended container (16) together.

4. An applicator according to claim 1, 2, or 3, and further comprising a linkage-and-toggle system (54) for oscillating said drive member (28).

5. An applicator according to any preceding claim, and further comprising an ultrasonic sealer (50) with retractable horn (52) for sealing said fitment (36) to said wall (22) and adapted to engage a surface of said wall (22) while the fitment-holder (48) is in place behind the fitment (36), thus to weld said fitment (36) to the opposite surface of said wall (22).

6. In combination, an applicator according to any preceding claim, and a conveyor (14) for advancing said container (16) into position beneath said fitment-holder (48), said oscillation of said fitment-holder (48) being in a plane transverse to the path of movement of the container (16) along said conveyor (14).

7. A method of inserting a fitment (36) into a wall (22) of an open-ended container (16), comprising oscillating a fitment-holder (48) between a fitment-receiving position and a second position, supplying a fitment (36) to said fitment-holder (48) while in its fitment-receiving position and turning said fitment-holder (48) and thus said fitment (36) from said fitment-receiving position to said second position in a single movement which is a turning movement, characterised in that, during the approach of said fitment-holder (48) to said second position, it inserts said fitment (36) into said wall (22).

8. A method according to claim 7, wherein said fitment (36) is a pour spout (36) and said wall (22) of said container (16) is a top closure panel (22) of a carton (16).

9. A method according to claim 7 or 8, wherein said oscillating of said fitment-holder (48) is transverse to a direction of advance of said container (16) past said fitment-holder (48).

## Patentansprüche

1. Applikator zum Anbringen von Ansätzen in einer Wand (22) eines Behälters (16) mit offenem Ende, mit einem Schwingantriebselement (28), einem Ansatzhalter (48) der von dem Antriebselement (28) zwischen einer Ansatzaufnahmeposition, in der ein Ansatz (36) in den Ansatzhalter (48) geladen wird, und einer zweiten Position verschwenkbar ist, und einer Zuführeinrichtung (38) zum Zuführen von Ansätzen (36) zu dem Ansatzhalter (48) in der Ansatzaufnahmeposition, dadurch gekennzeichnet, daß das Schwenken des Ansatzhalters (48) eine einzige Bewegung, nämlich eine Drehbewegung, von der Ansatzaufnahmeposition zu einer zweiten Position umfaßt, wobei der Ansatzhalter (48) den Ansatz (36) während der Annäherung an die zweite Position in die Wand (22) einsetzt.

2. Applikator nach Anspruch 1, bei dem die Zuführeinrichtung (38) aufweist: eine Rinne (34) zum ausgerichteten Aufnehmen von Ansätzen (36), ein zur Aufnahme jeweils eines Ansatzes (36) von der Rinne (34) ausgebildetes schwenkbares Endsegment (40) der Rinne (34), eine Vorspanneinrichtung (43) zum Drücken des Endsegments (40) in Richtung auf den Ansatzhalter (48), und eine bogenförmige Nockenfläche (32) eines an dem Antriebselement (28) befestigten Nockens (30), der in der Lage ist, das Endsegment (40) entgegen der Kraft der Vorspanneinrichtung (43) wieder in Ausrichtung auf die Rinne (34) zu bringen, während ein Amboß (46), der den Ansatzhalter (48) an dem Antriebselement (28) anbringt, in den Behälter (16) mit offenem Ende gedreht wird.

3. Applikator nach Anspruch 2, bei dem der Nocken (30) und der Amboß (46) nebeneinander an dem Antriebsteil (28) derart befestigt sind, daß Endbereiche derselben gemeinsam in den Behälter (16) mit offenem Ende eintreten und diesen verlassen.

4. Applikator nach Anspruch 1, 2 oder 3 und ferner mit einem Gestänge-und-Kniehebelsystem (54) zum Schwenken des Antriebselements (28).

5. Applikator nach einem der vorhergehenden Ansprüche und ferner mit einer Ultraschallsiegeleinrichtung (50) mit einer zurückziehbaren Spitze (52) zum Versigeln des Ansatzes (36) mit der Wand (22) und zum Angreifen an einer Fläche der Wand (22), während sich der Ansatzhalter (48) hinter dem Ansatz (36) befindet, um so den Ansatz (36) mit der gegenüberliegenden Fläche der Wand (22) zu versiegeln.

6. Kombination aus einem Applikator nach einem der vorhergehenden Ansprüche und einem Förderer (14) zum Vorschieben des Behälters (16) in eine Position unterhalb des Ansatzhalters (48), wobei das Schwenken des Ansatzhalters (48) in einer Ebene erfolgt, die quer zu der Bewegungsbahn des Behälters entlang dem Förderer (14) verläuft.

7. Verfahren zum Einsetzen eines Ansatzes (36) in eine Wand (22) eines Behälters (16) mit offenem Ende, mit den Schritten des Verschwenkens eines Ansatzhalters (48) zwischen einer Ansatzaufnähmeposition und einer zweiten Position, des Zuführens von Ansätzen zu dem Ansatzhalter (48) in der Ansatzaufnahmeposition, und des Drehens des Ansatzhalters (48) und damit des Ansatzes (36) aus der Ansatzaufnahmeposition in die zweite Position in einer einzigen Bewegung, nämlich einer Drehbewegung, dadurch gekennzeichnet, daß während der Annäherung des Ansatzhalters (48) an die zweite Position, dieser den Ansatz (36) in die Wand (22) einsetzt.

8. Verfahren nach Anspruch 7, bei dem der Ansatz (36) ein Ausgußstutzen (36) ist und die Wand (22) des Behälters (16) eine obere Verschlußbahn (22) eines Kartons (16) ist.

9. Verfahren nach Anspruch 7 oder 8, bei dem das Verschwenken des Ansatzhalters (48) quer zur Vorschubrichtung des Behälters (16) an dem Ansatzhalter (48) vorbei verläuft.

## Revendications

1. Un applicateur permettant d'insérer un raccord (36) dans une paroi (22) d'un récipient à extrémités ouvertes (16), comprenant un élément d'entraînement oscillant (28), un organe de maintien de raccords (48) amené à osciller par ledit élément d'entraînement (28) entre une position de réception de raccords dans lequel un raccord (36) est chargé dans ledit organe de maintien de raccords (48) et une seconde position, et des moyens d'amenée (38) pour fournir des raccords (36) audit organe de maintien de raccords (48) au niveau de ladite position de réception de raccords, caractérisé en ce que l'oscillation dudit organe de maintien de raccords (48) comprend un mouvement unique qui est un mouvement de rotation depuis ladite position de réception de raccords jusqu'à une seconde position pendant le mouvement d'approche au cours duquel ledit organe de maintien de raccords (48) insère ledit raccord (36) dans ladite paroi (22).

2. Un applicateur selon la revendication 1, dans lequel lesdits moyens d'amenée (38) comprennent une goulotte (34) pour recevoir de manière alignée des raccords (36), une partie d'extrémité pivotante (40) de ladite goulotte (34) adaptée à recevoir un seul raccord (36) à la fois en provenance de ladite goulotte (34), des moyens de sollicitation (43) pour pousser ladite partie d'extrémité (40) vers ledit organe de maintien de raccords (48), et une surface formant came arrondie (32) d'une came (30) fixée audit élément d'entraînement (28) et adaptée pour rappeler ladite partie d'extrémité (40) en alignement avec ladite goulotte (34) à l'encontre de la force desdits moyens de sollicitation (43) lorsqu'une enclume (46) de montage dudit organe de maintien de raccords (48) sur ledit élément d'entraînement (28) est en train d'être tournée dans le récipient à extrémités ouvertes (16).

3. Un applicateur selon la revendication 2, dans lequel ladite came (30) et ladite enclume (46) sont fixées côte à côte sur ledit élément d'entraînement (26) de telle manière que ses parties d'extrémité entrent ensemble dans ledit récipient à extrémités ouvertes (16) et le quittent ensemble.

4. Un applicateur selon la revendication 1, 2 ou 3, et comprenant en outre un système articulé de liaison (54) pour faire osciller ledit élément d'entraînement (28).

5. Un applicateur selon une revendication précédente quelconque, et comprenant en outre un organe à ultrasons (50) de liaison étanche présentant un cornet rétractable (52) pour relier de manière étanche ledit raccord (36) à ladite paroi (22) et adapté pour s'engager avec une surface de ladite paroi (22) tandis que l'organe de maintien de raccords (48) est en place derrière le raccord (36), pour souder ainsi ledit raccord (36) à la surface opposée de ladite paroi (22).

6. En combinaison, un applicateur selon une revendication précédente quelconque, et un convoyeur (14) pour faire avancer ledit récipient (16) dans une position sous ledit organe de maintien de raccords (48), ladite oscillation dudit organe de maintien de raccords (48) se faisant dans un plan transversal au trajet de déplacement du récipient (16) le long dudit convoyeur (14).

7. Un procédé d'insertion d'un raccord (36) dans une paroi (22) d'un récipient à extrémités ouvertes (16), comprenant les opérations consistant à faire osciller un organe de maintien de raccords (48) entre une position de réception de raccords et une seconde position, amener un raccord (36) vers ledit organe de maintien de raccords (48) alors qu'il est dans sa position de réception de raccords et faire tourner ledit organe de maintien de raccords (48) et ainsi ledit raccord (36) depuis ladite position de réception de raccords jusqu'à ladite seconde position dans un mouvement unique qui est un mouvement de rotation, caractérisé en ce que, pendant le mouvement d'approche dudit organe de maintien de raccords (48) vers ladite seconde position, il insère ledit raccord (36) dans ladite paroi (22).

8. Un procédé selon la revendication 7, dans lequel ledit raccord (36) est un bec verseur (36) et ladite paroi (22) dudit récipient (16) est un panneau de fermeture supérieur (22) d'un emballage en carton (16).

9. Un procédé selon la revendication 7 ou 8, dans lequel ladite oscillation dudit organe de maintien de raccords (48) est transversale à une direction d'avance dudit récipient (16) au-delà dudit organe de maintien de raccords (48).
